# EUROPEAN PATENT APPLICATION

(11) **EP 2 538 587 A1**
(43) Date of publication of application: **26.12.2012**
(21) Application number: 11170797.2
(22) Date of filing: 21.06.2011
(51) Int. Cl.: H04B 10/18

(54) **Optical communication system and method of upgrading an optical network**

(71) Applicant: Nokia Siemens Networks Oy, 02610 Espoo (FI)
(72) Inventor: Xia, Chunmin, 81475 Munich (CN); Striegler, Arne, 80337 Munich (DE)

(57) **Abstract**

An optical communication system and method of upgrading an optical network are provided, wherein the system provides a transmitting unit for generating optical signals, a receiving unit for receiving optical signals, an optical communication link between the transmitting unit and the receiving unit, and wherein the optical communication link includes a differential group delay element.

## Description

### FIELD OF THE INVENTION

The invention relates to an optical communication system and to a method of upgrading an optical network. In particular, the invention relates to optical coherent polarization multiplexed PSK WDM transmission systems.

### BACKGROUND OF THE INVENTION

In optical communication networks, high spectral efficiency (determined in (bits/s)/Hz) is a key parameter for a cost-efficient network operation. For this reason, modulation formats such as differential phase shift keying (DPSK) or quadrature phase shift keying (QPSK) can be used to provide a robust, spectral efficient transmission system. The spectral efficiency can be further increased via polarization multiplexing (POLMUX); in particular, e.g., polarization multiplexed QPSK (POLMUX-QPSK).

POLMUX-QPSK with coherent detection is a modulation format that can be utilized in next-generation networks as it has advantages like high tolerance towards accumulated chromatic dispersion (CD) and polarization mode dispersion (PMD) in combination with a high spectral efficiency.

Coherent-detected polarization-multiplexed (CP) M-ary shift keying (MPSK) modulation, also referred to as CP-MPSK, as well as CP-DPSK (Coherent-detected polarization-multiplexed Differential Phase Shift Keying) and CP-QPSK (Coherent-detected polarization-multiplexed Quadrature Phase Shift Keying), combined with digital signal processing (DSP) are considered as a promising technique for high speed optical wavelength division multiplexed (WDM) networks. The combination of digital signal processing (DSP) and coherent detection in the receiver allows for the compensation of basically any linear signal distortion using linear finite impulse response (FIR) filters, including chromatic dispersion (CD) and polarization mode dispersion (PMD). However, CP-MPSK transmission systems show performance degradation due to nonlinear effects, especially cross phase modulation (XPM) and cross polarization modulation (XPolM). The low XPM tolerance of CP-MPSK with a low data rate is particularly evident in dispersion managed systems, since the dispersion map reduces the walk-off between adjacent WDM channels

A large number of techniques to mitigate nonlinear polarization effects are known from the prior art. Cited, for example, is Chongjin Xie, "Interchannel Nonlinearities in Coherent Polarization-Division-Multiplexed Quadrature-Phase-Shift-Keying Systems", IEEE Photonics Technology Letters, Vol. 21, NO. 5, March 1, 2009 which employs the interleaved return-to-zero (RZ) pulse format. However, in the cited example one additional pulse carver such as Mach-Zehnder-modulator is required in order to generate RZ-pulse signal. This will most probably add additional cost to the non-return-to-zero (NRZ) - pulse shape based CP-QPSK, especially for 40G CP-QPSK transmission. Moreover, the alignment of interleaved RZ signal can be very easily broken by some physical effects during transmission such as PMD in the fibers. Therefore, the possible benefit brought by interleaved alignment cannot be guaranteed any more.

Cited from the prior art, is also *Chongjin Xie, "Suppression of inter-channel nonlinearities in WDM coherent PDM-QPSK Systems using periodic- group-delay dispersion compensators, paper P4.08, ECOC 2009", which* employs periodic group delay dispersion compensators. However, in the cited document, Periodic Group Delay (PGD) dispersion compensators are required, which are similar to conventional dispersion compensating fiber (DCF) based compensators but with a little group delay between channels. Nevertheless, it must be noted that such PGD dispersion compensators have to be designed and produced adding therefore additional complexity and costs. Moreover, the improvement due to PGD is rather small for pure CP-QPSK WDM transmissions based on simulations by assuming an ideal PGD. A fortiori, the performance improvement will be even small with a non-ideal PGD.

Cited from the prior art, is also Ezra Ip, "Nonlinear Compensation Using Back-propagation for Polarization-Multiplexed Transmission, Journal of Lightwave Technology, Vol. 28, NO. 6, March 15, 2010, pp 939-950*, which uses the* back-propagation method. However, although back-propagation technique can compensate relatively well self-phase modulation (SPM) and achieve certain amount of improvement for single channel transmission, it can not unfortunately compensate effectively inter-channel nonlinearities in a WDM system. Moreover, it requires complicated numerical calculations, its implementation complexity of DSP is high and the success is not necessarily guaranteed.

The problem to be solved is to overcome the disadvantages stated above and in particular to provide a solution that minimize the destructive Cross Polarization Modulation (XPolM) interactions in polarization-multiplexed transmission systems such as CP-QPSK.

### SUMMARY OF THE INVENTION

In order to overcome the above-described need in the art, the present invention discloses a optical communication system comprising a transmitting unit for generating optical signals, a receiving unit for receiving optical signals, an optical communication link between the transmitting unit and the receiving unit, the optical communication link including a differential group delay element.

In a next embodiment of the invention the optical communication link includes a plurality of differential group delay elements distributed along the optical communication link.

In other embodiments of the present invention, the optical communication link includes a plurality of optical fiber spans, each optical fiber span including a differential group delay element.

It is also an embodiment, that each optical fiber span includes a transmission fiber, for example a standard single mode fiber.

In a further embodiment, each differential group delay element is coupled to each transmission fiber.

In a next embodiment, each differential group delay element is positioned after each transmission fiber.

According to an alternative embodiment of the invention, a differential group delay (DGD) element is positioned after every two spans or after a given number of spans.

It is also an embodiment, that the receiving unit includes a receiver connected to a digital signal processing (DSP) unit, the digital signal processing (DSP) unit being connected to a bit error ratio (BER) calculating unit.

In a further embodiment, the bit error ratio (BER) calculating unit is coupled to the differential group delay element, so that the differential group delay can be determined according to the calculated bit error ratio.

In a next embodiment, the transmitting unit is configured to transmit Coherent-detected Polarization-multiplexed M-Phase Shift Keying (CP-MPSK) optical signals.

In a further embodiment, the transmitting unit is configured to transmit Coherent-detected polarization-multiplexed Differential Phase Shift Keying (CP-DPSK) optical signals.

In a next embodiment, the transmitting unit is configured to transmit Coherent-detected polarization-multiplexed Quadrature Phase Shift Keying (CP-QPSK) optical signals.

It is also an embodiment, that the receiving unit is configured to receive Coherent-detected Polarization-multiplexed M-Phase Shift Keying (CP-MPSK) optical signals.

In a further embodiment, the receiving unit is configured to receive Coherent-detected polarization-multiplexed Differential Phase Shift Keying (CP-DPSK) optical signals.

In a next embodiment, the receiving unit is configured to receive Coherent-detected polarization-multiplexed Quadrature Phase Shift Keying (CP-QPSK) optical signals.

The problem stated above is also solved by a method of upgrading an optical network, the optical network comprising a transmitting unit, a receiving unit and an optical communication link between the transmitting unit and the receiving unit, the method comprising the step of adding a differential group delay element in the optical communication link.

In a next embodiment of the invention, the optical communication link includes a plurality of optical fiber spans, and the method further includes the step of adding a differential group delay element in each of the optical fiber spans.

In a further embodiment, each optical fiber span includes a transmission fiber, for example a standard single mode fiber, and the method further includes the step of adding a differential group delay element after each transmission fiber.

According to an alternative embodiment of the invention, the method further includes the step of adding a differential group delay (DGD) element after every two spans or after a given number of spans.

The method and the system provided, in particular, bears the following advantages:
a) The required components may be, for example, commercially available DGD elements such as polarization maintenance fibers (PMF). Therefore, the implementation can be straightforward and easy to be carried out.
b) They have relatively broad applications: they can be implemented regardless of the fiber types, channel spacing, data rates as well as modulation levels.
c) Remarkable performance improvement can be achieved.

### BRIEF DESCRIPTION OF THE DRAWINGS

The invention is explained by way of example in more detail below with the aid of the attached drawings.
Fig.1 shows an illustrative system for transmitting data without a Differential Group Delay (DGD) element.
Fig.2 shows an illustrative system for transmitting data having a Differential Group Delay (DGD) element positioned at the end of the optical link.
Fig.3 shows an illustrative system for transmitting data having a Differential Group Delay (DGD) element positioned in front of the optical link.
Fig.4 shows an illustrative system for transmitting data having Differential Group Delay (DGD) elements distributed along the optical link according to an embodiment of invention.
Fig.5 shows an illustrative system for transmitting data having Differential Group Delay (DGD) elements distributed along the optical link according to an alternative embodiment of invention.
Fig.6 is an illustration 601 of a simulation which shows the optical-to-signal-ratio (OSNR) penalty 602 versus the input power 603 for a set-up according to the embodiment of the invention.

### DESCRIPTION OF THE INVENTION

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

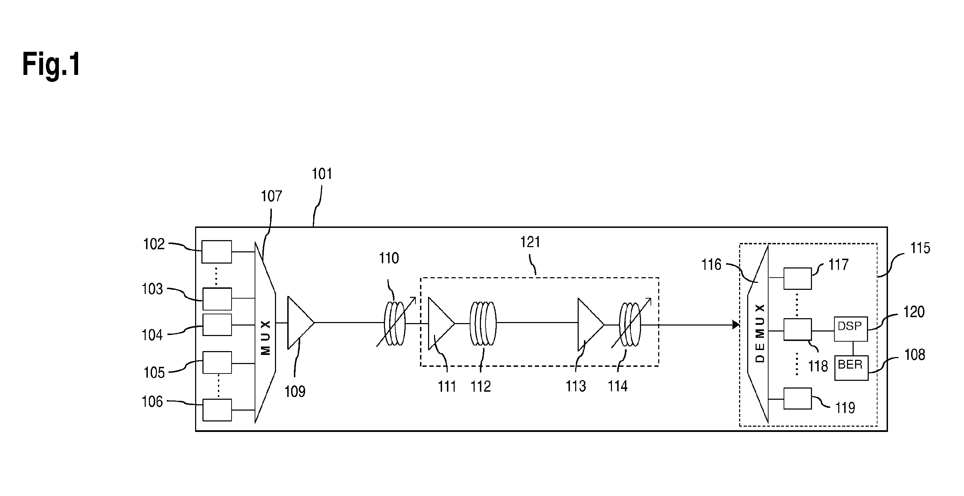

Fig.1 shows an illustrative system for transmitting data without a Differential Group Delay (DGD) element.

An illustrative set-up 101 comprises several transmitters 102 to 106 which are connected via a multiplexer 107 to a booster 109 which is itself connected to a pre-compensation fiber 110. The pre-compensation fiber 110 is connected to an optical link 121, which includes a booster 111 connected to a transmission fiber, for example a standard single mode fiber (SSMF) 112; a booster 113 connects the standard single mode fiber (SSMF) 112 to a dispersion compensating fiber (DCF) 114, which is itself connected to a receiving unit 115.

The receiving unit 115 comprises a demultiplexer 116 that is connected to several receivers 117 to 119, wherein each receiver's output can be fed to a digital signal processing (DSP) unit, illustratively shown by a DSP unit 120 connected to the receiver 118. Moreover, each DSP unit can be connected to a bit error ratio (BER) calculating unit used to calculate a bit error ratio (BER) of the center channel, illustratively shown by a bit error ratio (BER) calculating unit 108 connected to the DSP unit.

The illustrative optical link 121 is represented by means of a single span. A real optical link would include a plurality of spans, each of which may include at least a transmission fiber, for example a standard single mode fiber (SSMF) 112, possibly preceded by a booster 111 and followed by a dispersion compensating fiber (DCF) 114, to partially compensate the dispersion from the transmission fibers, and a booster 113 coupled with the dispersion compensating fiber (DCF) 114. For simplicity, the illustrative optical link 121 includes only one span.

In order to show numerical simulations and performance evaluations a 45.8Gb/s CP-QPSK nine channels WDM transmissions with a channel spacing of 50GHz has been shown as illustrative example. In the shown example the illustrative optical link 121 includes 20 spans Standard Single Mode Fibers (SSMF) 112 with each being 80km and the corresponding dispersion compensating fibers (DCF) 114 are applied to compensate partially the dispersion from transmission fibers. All nonlinear effects (SPM, XPM, XPolM and FWM) have been taken into account. PMD coefficient has been assumed to be 0 in all fibers. The pre-compensation as well as the residual dispersion per-span is optimized for conventional OOK or DPSK transmissions. The center channel is de-multiplexed and processed further by the DSP 120 based receiver 118. The noise is added in the end before the DSP 120 based receiver 118. By adjusting the input power and based on the calculated BER, the required optical-to-signal-ratio (OSNR) to achieve a BER of 10⁻³ is calculated.

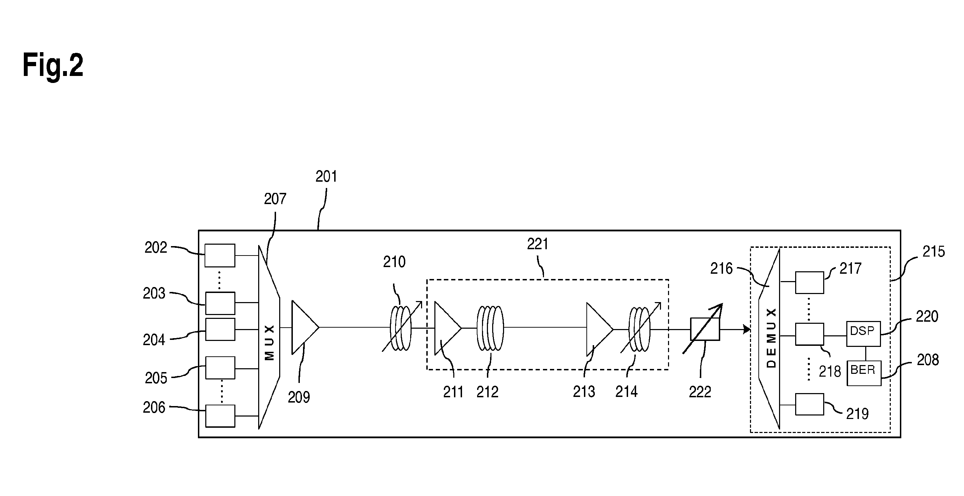

Fig.2 shows an illustrative system for transmitting data having a Differential Group Delay (DGD) element positioned at the end of the optical link.

An illustrative set-up 201 comprises several transmitters 202 to 206 which are connected via a multiplexer 207 to a booster 209 which is itself connected to a pre-compensation fiber 210. The pre-compensation fiber 210 is connected to an optical link 221, which includes a booster 211 connected to a transmission fiber, for example a standard single mode fiber (SSMF) 212; a booster 213 connects the transmission fiber 212 to a dispersion compensating fiber (DCF) 214. A Differential Group Delay Unit 222 is positioned at the end of the optical link 221, before the receiving unit 215.

The receiving unit 215 comprises a demultiplexer 216 that is connected to several receivers 217 to 219, wherein each receiver's output can be fed to a digital signal processing (DSP) unit, illustratively shown by a DSP unit 220 connected to the receiver 218. Moreover, each DSP unit can be connected to a bit error ratio (BER) calculating unit used to calculate a bit error ratio (BER) of the center channel, illustratively shown by a bit error ratio (BER) calculating unit 208 connected to the DSP unit.

The illustrative optical link 221 is represented by means of a single span. A real optical link would include a plurality of spans, each of which may include at least a transmission fiber, for example a standard single mode fiber (SSMF) 212, possibly preceded by a booster 211 and followed by a dispersion compensating fiber (DCF) 214, to partially compensate the dispersion from the transmission fibers, and a booster 213 coupled with the dispersion compensating fiber (DCF) 214. For simplicity, the illustrative optical link 221 includes only one span.

In order to show numerical simulations and performance evaluations a 45.8Gb/s CP-QPSK nine channels WDM transmissions with a channel spacing of 50GHz has been shown as illustrative example. In the shown example the illustrative optical link 221 includes 20 spans Standard Single Mode Fibers (SSMF) 212 with each being 80km and the corresponding dispersion compensating fibers (DCF) 214 are applied to compensate partially the dispersion from transmission fibers. The Differential Group Delay Units 222 have a differential group delay of 24ps (the overall mean DGD from 20 DGD concatenations is around 24ps and hence 24ps has been assumed for the setup shown in Fig. 2). All nonlinear effects (SPM, XPM, XPolM and FWM) have been taken into account. PMD coefficient has been assumed to be 0 in all fibers. The pre-compensation as well as the residual dispersion per-span is optimized for conventional OOK or DPSK transmissions. The center channel is de-multiplexed and processed further by the DSP 220 based receiver 218. The noise is added in the end before the DSP 220 based receiver 218. By adjusting the input power and based on the calculated BER, the required optical-to-signal-ratio (OSNR) to achieve a BER of 10⁻³ is calculated.

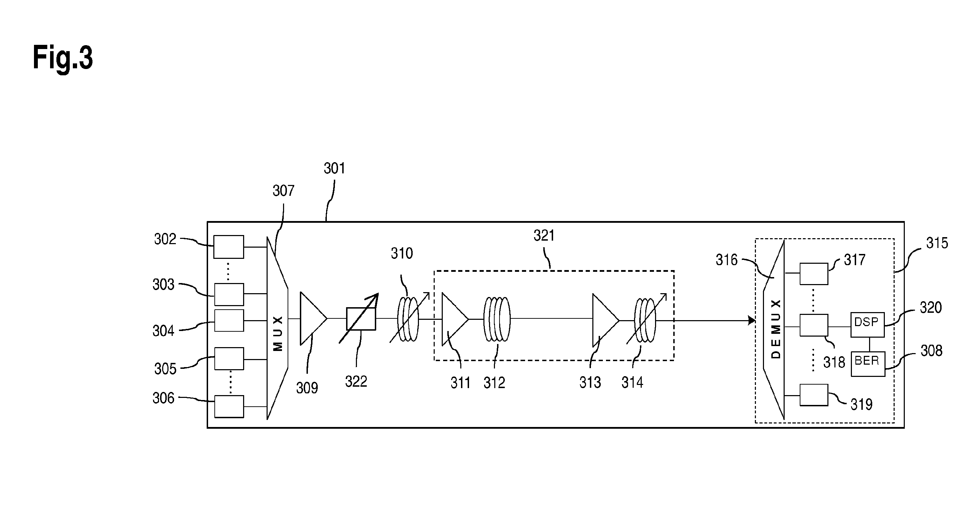

Fig.3 shows an illustrative system for transmitting data having a Differential Group Delay (DGD) element positioned in front of the optical link.

An illustrative set-up 301 comprises several transmitters 302 to 306 which are connected via a multiplexer 307 to a booster 309. A Differential Group Delay Unit 322 is positioned in front of the optical link 321, before a pre-compensation fiber 310. The pre-compensation fiber 310 is connected to the optical link 321, which includes a booster 311 connected to a transmission fiber, for example a standard single mode fiber (SSMF) 312; a booster 313 connects the transmission fiber 312 to a dispersion compensating fiber (DCF) 314. The optical link 321 is connected to the receiving unit 315.

The receiving unit 315 comprises a demultiplexer 316 that is connected to several receivers 317 to 319, wherein each receiver's output can be fed to a digital signal processing (DSP) unit, illustratively shown by a DSP unit 320 connected to the receiver 318. Moreover, each DSP unit can be connected to a bit error ratio (BER) calculating unit used to calculate a bit error ratio (BER) of the center channel, illustratively shown by a bit error ratio (BER) calculating unit 308 connected to the DSP unit.

The illustrative optical link 321 is represented by means of a single span. A real optical link would include a plurality of spans, each of which may include at least a transmission fiber, for example a standard single mode fiber (SSMF) 312, possibly preceded by a booster 311 and followed by a dispersion compensating fiber (DCF) 314, to partially compensate the dispersion from the transmission fibers, and a booster 313 coupled with the dispersion compensating fiber (DCF) 314. For simplicity, the illustrative optical link 321 includes only one span.

In order to show numerical simulations and performance evaluations a 45.8Gb/s CP-QPSK nine channels WDM transmissions with a channel spacing of 50GHz has been shown as illustrative example. In the shown example the illustrative optical link 321 includes 20 spans Standard Single Mode Fibers (SSMF) 312 with each being 80km and the corresponding dispersion compensating fibers (DCF) 314 are applied to compensate partially the dispersion from transmission fibers. The Differential Group Delay Units 322 have a differential group delay of 24ps (the overall mean DGD from 20 DGD concatenations is around 24ps and hence 24ps has been assumed for the setup shown in Fig. 3). All nonlinear effects (SPM, XPM, XPolM and FWM) have been taken into account. PMD coefficient has been assumed to be 0 in all fibers. The pre-compensation as well as the residual dispersion per-span is optimized for conventional OOK or DPSK transmissions. The center channel is de-multiplexed and processed further by the DSP 320 based receiver 318. The noise is added in the end before the DSP 320 based receiver 318. By adjusting the input power and based on the calculated BER, the required optical-to-signal-ratio (OSNR) to achieve a BER of 10⁻³ is calculated.

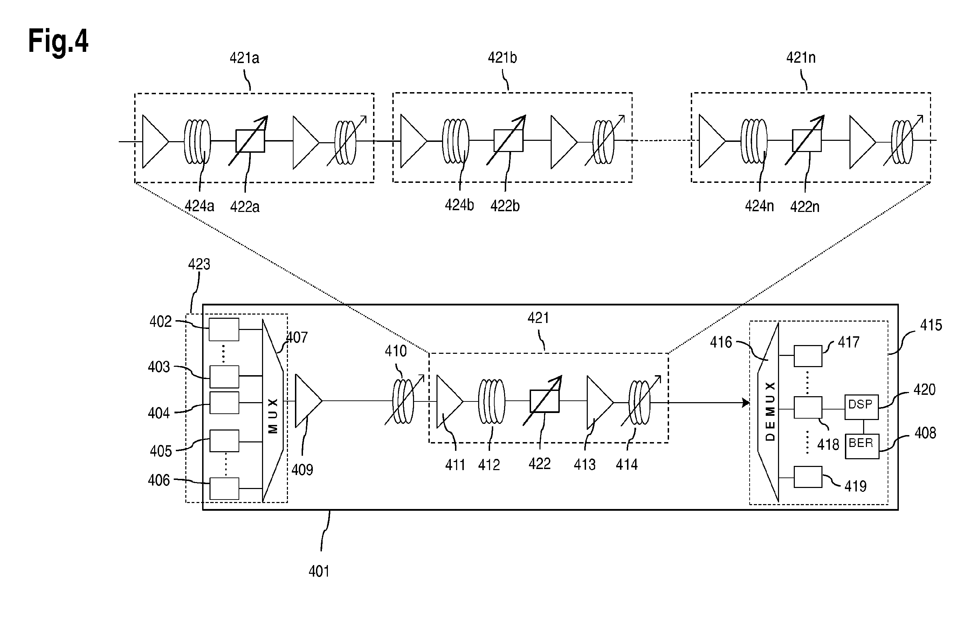

Fig.4 shows an illustrative for transmitting data having Differential Group Delay (DGD) elements distributed along the optical link according to an embodiment of invention.

An illustrative set-up 401 comprises a transmitting unit 423 including several transmitters 402 to 406 which are connected via a multiplexer 407 to a booster 409 which is itself connected to a pre-compensation fiber 410. The pre-compensation fiber 410 is connected to an optical link 421, which includes a booster 411 connected to a transmission fiber, for example a Standard Single Mode Fiber (SSMF) 412. A Differential Group Delay Unit 422 is positioned after the transmission fiber 412. A booster 413 connects the Differential Group Delay Unit 422 to a dispersion compensating fiber (DCF) 414. The optical link 421 is connected to the receiving unit 415.

The receiving unit 415 comprises a demultiplexer 416 that is connected to several receivers 417 to 419, wherein each receiver's output can be fed to a digital signal processing (DSP) unit, illustratively shown by a DSP unit 420 connected to the receiver 418. Moreover, each DSP unit can be connected to a bit error ratio (BER) calculating unit used to calculate a bit error ratio (BER) of the center channel, illustratively shown by a bit error ratio (BER) calculating unit 408 connected to the DSP unit.

The illustrative optical link 421 is represented by means of a single span 421. A real optical link according to an embodiment of the present invention would include a plurality of f optical fiber spans (421a, 421b,...421n), each of which may include at least transmission fiber (424a, 424b,...424n), preceded by a booster and followed by a Differential Group Delay Unit (422a, 422b,...422n), which in turn may be followed by a dispersion compensating fiber (DCF), to partially compensate the dispersion from the transmission fibers, and a booster coupled with the dispersion compensating fiber (DCF).

In order to show numerical simulations and performance evaluations a 45.8Gb/s CP-QPSK nine channels WDM transmissions with a channel spacing of 50GHz has been shown as illustrative example. In the shown example the illustrative optical link 421 includes 20 spans (n=20) Standard Single Mode Fibers (SSMF) 412 with each being 80km and the corresponding dispersion compensating fibers (DCF) 414 are applied to compensate partially the dispersion from transmission fibers. The Differential Group Delay Units 422 have a differential group delay of 5.3ps (the value of 5.3ps has been chosen to achieve near optimum performance). All nonlinear effects (SPM, XPM, XPolM and FWM) have been taken into account. PMD coefficient has been assumed to be 0 in all fibers. The pre-compensation as well as the residual dispersion per-span is optimized for conventional OOK or DPSK transmissions. The center channel is de-multiplexed and processed further by the DSP 320 based receiver 318. The noise is added in the end before the DSP 120 based receiver 318. By adjusting the input power and based on the calculated BER, the required optical-to-signal-ratio (OSNR) to achieve a BER of 10⁻³ is calculated.

According to an embodiment of the invention, in order to contrast the penalty induced by XPolM in CP-QPSK WDM transmissions one differential group delay (DGD) element is added after each span, for example is distributing DGD along the link. Alternatively, a differential group delay (DGD) element can be added after every two spans or after a given number of spans. For example, a given number of DGD elements are added in a distributed way along the link.

Some amount of DGD added after transmission fiber together with the random polarization rotation can de-polarize CP-QPSK signals and thus reduces the data-dependent nonlinear polarization rotation. The added overall DGD can be fully compensated by the finite impulse response FIR equalizer in the receiver. Therefore, DGD itself will not cause any penalty.

Adjustable DGD elements with certain amount of DGD range (0~8ps) may be considered the most suitable components. The absolute DGD value of each element is not critical because the average de-polarization effect plays an important role. The average DGD is dependent on the amount of XPolM, which is directly dependent on the input power as well as the channel spacing and fiber parameters such as dispersion coefficient and nonlinear coefficient. The performance can be optimized by adjusting the DGD value based on the measured BER.

The embodiment of the invention described above is particularly advantageous for the dispersion managed CP-QPSK WDM systems, especially for the new developed transmission fibers having very low polarization mode dispersion. It also is independent on fiber types, channel spacing, modulation type and data rate.

It can also be used for hybrid WDM transmission such as mixed CP-QPSK and OOK transmission. For the old transmission fibers having relatively large PMD, the DGD should be adjusted to small values or even 0ps in order to make sure the overall accumulated linear DGD can be fully compensated by DSP in the receiver. For meshed networks, relatively large DGD added may cause some penalty for conventional single polarization modulation formats such as OOK and DPSK. Therefore, the added DGD should be a trade off between the performance improvement for CP-QPSK and the performance degradation for OOK/DPSK signals.

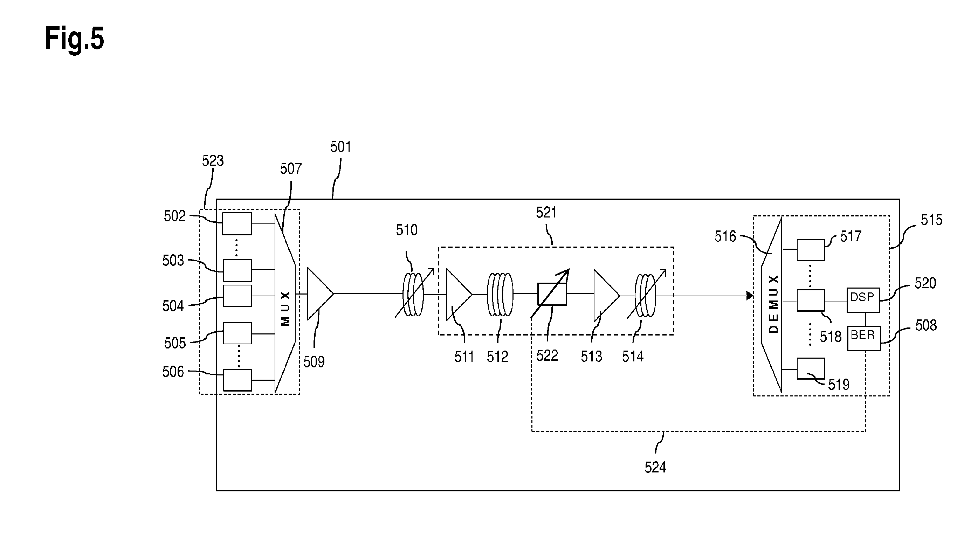

Fig.5 shows an illustrative system for transmitting data having Differential Group Delay (DGD) elements distributed along the optical link according to an alternative embodiment of invention.

Similarly to the set up shown in Fig.4, in the alternative embodiment shown in FIG. 5 a Differential Group Delay Unit 522 is positioned after the transmission fiber 512. However, in the present embodiment, the Differential Group Delay Unit 522 is coupled 524 to the BER unit 508 and link can be adjusted based on the BER output from the receiver 518. This can be particularly useful in cases where there is a lack of the information about the exact amount of nonlinearity presented in the link. A rough adjustment of DGD can be sufficient. It may not be necessary to estimate the exact DGD value as well as the exact distribution of DGD since in most of the cases the average effect of DGD plays is the key parameter.

According to another embodiment of the invention all DGD elements are set with similar DGD values.

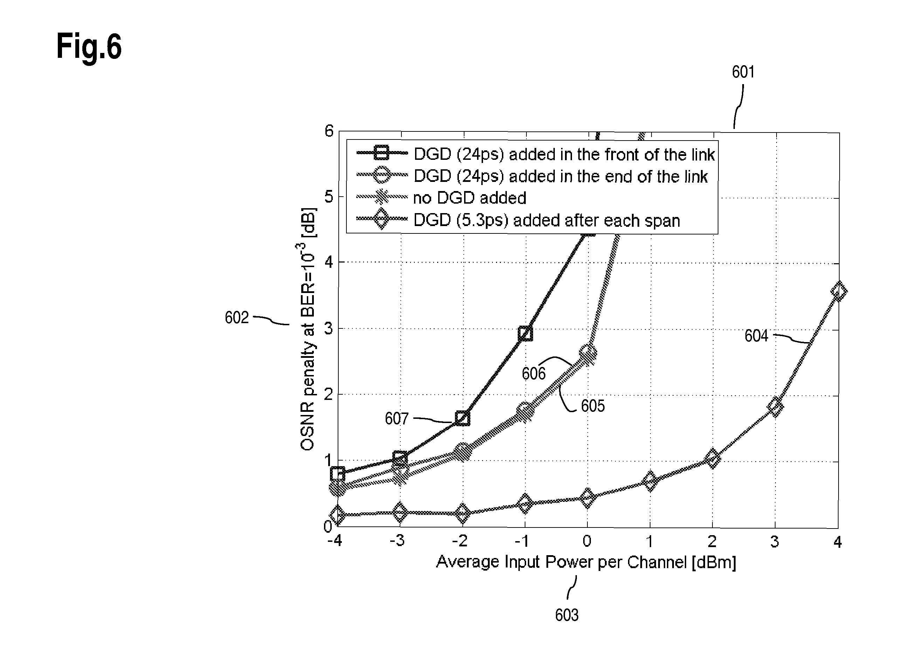

Fig.6 is an illustration 601 of a simulation which shows the optical-to-signal-ratio (OSNR) penalty 602 versus the input power 603 for a set-up according to the embodiment of the invention which includes a DGD (5.3ps) after each span 604, compared with the cases with no DGD added 605, or with a DGD included in the front of the link 607 or with a DGD included in the end of the link 606.

Results shown in Figure 6 indicate that significant performance improvement can be achieved by adding DGD after each span compared to no DGD added. This is mainly due to the randomly de-polarization effect from DGD. Figure 6 shows also that if the DGD is concentrated before the transmission 607, performance degradation is observed and this indicates that the interaction between PMD and nonlinearity can not be effectively compensated by linear FIR filter based equalization in the DSP. Figure 6 shows also that similar performance is observed by adding the same amount of concentrated DGD in the end of the link 606 compared to the case of no DGD added 605.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

### List of Abbreviations:

- BER: bit error ratio
- BPSK: binary phase shift keying
- CD: chromatic dispersion
- CP: coherent-detected polarization-multiplexed
- CP-MPSK: CP M-phase shift keying
- CP-QPSK: CP quadrature phase shift keying
- DGD: differential group delay
- DSP: digital signal processing
- DPSK: differential phase shift keyed
- DSP: digital signal processing
- FIR: finite impulse response
- NRZ: non-return-to-zero
- OOK: on-off keying
- OSNR: optical-signal-to-noise-ratio
- PMD: polarization mode dispersion
- PMF: polarization maintenance fiber
- QPSK: quadrature phase shift keying
- RZ: return-to-zero
- SSMF: standard single mode fiber
- SPM: self-phase modulation
- WDM: wavelength division multiplex
- XPM: cross phase modulation
- XPolM: cross polarization modulation

## Claims

1. An optical communication system (401, 501) comprising:
- a transmitting unit (423, 523) for generating optical signals;
- a receiving unit (415, 515) for receiving optical signals;
- an optical communication link (421, 521) between the transmitting unit and the receiving unit;
**characterized in that**:
- the optical communication link (421, 521) including a differential group delay element (422, 522).

2. The optical communication system (401) according to claim 1, wherein the optical communication link (421) includes a plurality of differential group delay elements (422a, 422b,...422n) distributed along the optical communication link (421).

3. The optical communication system (401) according to claim 1 or claim 2, wherein the optical communication link (421) includes a plurality of optical fiber spans (421a, 421b,...421n), each optical fiber span including a differential group delay element(422a, 422b,...422n).

4. The optical communication system (401) according to claim 3, wherein each optical fiber span (421a, 421b,...421n) includes a transmission fiber (424a, 424b,...424n).

5. The optical communication system (401) according to claim 4, wherein each differential group delay element (422a, 422b,...422n) is coupled to each transmission fiber (424a, 424b,...424n).

6. The optical communication system (401) according to claim 5, wherein each differential group delay element (422a, 422b,...422n) is positioned after each transmission fiber (424a, 424b,...424n).

7. The optical communication system (401, 501) according to any of the preceding claims, wherein the receiving unit (415, 515) includes a receiver (418, 518) connected to a digital signal processing (DSP) unit (420, 520), the digital signal processing (DSP) unit (420, 520) being connected to a bit error ratio (BER) calculating unit (408, 508).

8. The optical communication system (501) according to claim 7, wherein the bit error ratio (BER) calculating unit (508) is coupled (524) to the differential group delay element (522), so that the differential group delay can be determined according to the calculated bit error ratio.

9. The optical communication system (401, 501) according to any of the preceding claims, wherein the transmitting unit (423, 523) is configured to transmit Coherent-detected Polarization-multiplexed M-Phase Shift Keying (CP-MPSK) optical signals.

10. The optical communication system (401, 501) according to any of the preceding claims, wherein the receiving unit (415, 515) is configured to receive Coherent-detected Polarization-multiplexed M-Phase Shift Keying (CP-MPSK) optical signals.

11. A method of upgrading an optical network, the optical network comprising a transmitting unit (423, 523), a receiving unit (415, 515) and an optical communication link (421, 521) between the transmitting unit and the receiving unit;
**characterized in that**:
the method comprising:
adding a differential group delay element (422, 522) in the optical communication link (421, 521).

12. The method according to claim 11, the optical communication link (421) including a plurality of optical fiber spans (421a, 421b,...421n), the method further comprising: adding a differential group delay element(422a, 422b,...422n) in each of the optical fiber spans.

13. The method according to claim 13, each optical fiber span (421a, 421b,...421n) including a transmission fiber (424a, 424b,...424n), the method further comprising adding a differential group delay element(422a, 422b,...422n) after each transmission fiber (424a, 424b,...424n).
